# EUROPÄISCHE PATENTANMELDUNG

(11) **EP 0 812 744 A1**
(43) Veröffentlichungstag der Anmeldung: **17.12.1997**
(21) Anmeldenummer: 96109243.4
(22) Anmeldetag: 10.06.1996
(51) Int. Cl.: B60S 1/34

(54) **Einrichtung zum Beabstanden eines Scheibenwischers**

(71) Anmelder: Treppe, Elvir, 8700 Küsnacht (CH); Casal, Marco, 8142 Uitikon (CH)
(72) Erfinder: Treppe, Elvir, CH-8700 Küsnacht (CH)
(74) Vertreter: Hotz, Klaus, Dipl.-El.-Ing./ETH Patentanwalt

(57) **Zusammenfassung**

Einrichtung **(22)** zum Beabstanden eines an einem Schwenkarm **(14)** befestigten Scheibenwischers **(16)** von einer Scheibe. Die Einrichtung **(22)** weist eine am Schwenkarm **(14)** befestigbare Fixiervorrichtung **(24)** und einen an dieser befestigten Distanzhalter **(26)** auf. Dieser besizt eine Scheibenkontaktfläche **(28)** und ist relativ zur Fixiervorrichtung **(24)** zwischen einer Wirklage und einer Ruhelage bewegbar. Befindet er sich in der Wirklage, so ist der Abstand der Scheibenkontaktfläche **(28)** zur Fixiervorrichtung **(24)** maximal, die Scheibenkontaktfläche **(28)** liegt auf der Scheibe und beabstandet den Scheibenwischer **(16)** von der Scheibe gegen die Kraft einer Zustellvorrichtung; befindet er sich in der Ruhelage, so ist der Abstand der Scheibenkontaktfläche **(28)** von der Fixiervorrichtung **(24)** minimal, die Scheibenkontaktfläche **(28)** liegt nicht an der Scheibe an und der Scheibenwischer **(16)** berührt die Scheibe.

## Beschreibung

Die Erfindung betrifft eine Einrichtung nach dem Oberbegriff des Patentanspruchs 1.

Flüssigkeiten wie Reinigungsflüssigkeiten, Regenwasser und Spritzwasser, meist mit Schmutzpartikeln, die auf Scheiben von Verkehrsmitteln gelangen, werden durch motorisch antreibbare Scheibenwischervorrichtungen aus dem Blickfeld des Führers des Verkehrsmittels entfernt. Uebliche Scheibenwischervorrichtungen weisen einen Schwenkarm auf, der parallel zur Scheibe hin- und herschwenkbar ist, und an dessen freiem Ende ein Scheibenwischer gelenkig befestigt ist. Der Scheibenwischer besteht im wesentlichen aus einem Wischerträger, der den am Schwenkarm befestigten Teil bildet, und aus einem Wischerblatt, das seinerseits am Wischerträger befestigt und mit einer Lippe versehen ist, welche bei eingeshalteter Scheibenwischervorrichtung längs der Scheibe gleitet und dabei das Blickfeld von den genannten Flüssigkeiten befreit. Damit die Scheibe und auch der Scheibenwischer gereinigt werden können, lässt sich der Schwenkarm quer zur Scheibe aus seiner Arbeitsstellung in eine Reinigungsstellung wegkippen. Um die Reinigungswirkung der Scheibenwischervorrichtung zu gewährleisten, ist eine meist federbetätigte Zustellvorrichtung vorgesehen, welche die Aufgabe hat, den Scheibenwischer bzw. den Wischerteil mit seiner Lippe an die Scheibe anzudrücken.

Die Zustellvorrichtung, durch welche der Scheibenwischer bzw. das Wischerblatt mit der meist aus Kunststoff bzw. Gummi bestehenden Lippe auf die Scheibe gepresst wird, wirkt nicht nur dann auf den Scheibenwischer, wenn dieser in Betrieb ist, sondern fortwährend, bei angehaltenem Scheibenwischer und auch, wenn das Verkehrsmittel nicht benützt wird. Die daraus entstehenden Nachteile sind bekannt. Im Winter bei feuchtkalter Witterung friert der Scheibenwischer mit seiner Lippe an der Scheibe an, im Sommer bei hohen Temperaturen klebt der Scheibenwischer mit seiner Lippe an der Scheibe fest. Der Scheibenwischer muss, damit er wieder funktionsfähig ist, von der Scheibe gelöst werden. Dies kann von Hand geschehen, indem man den Schwenkarm vorübergehend in die Reinigungsstellung verschwenkt; wenn dies bei Inbetriebnahme des Verkehrsmittels vergessen wird, muss die Entfernung des Scheibenwischers von der Scheibe durch den Scheibenwischer-Antrieb erfolgen, wozu dieser gelegentlich nicht ausreicht und was ihn unnötig beansprucht. Die Entfernung des angefrorenen oder angeklebten Scheibenwischers von der Scheibe benötigt jedenfalls eine beträchtliche Kraft und hat bei häufiger Wiederholung zur Folge, dass sich der Scheibenwischer an der Lippe stark abnützt, wodurch er seine Reinigungsfähigkeit einbüsst und häufig ausgetauscht werden muss. Eine weitere Unannehmlichkeit, die ebenfalls zur Abnützung der Scheibenwischer beiträgt, wird bei ruhenden Verkehrsmitteln mit satt an der Scheibe anliegenden Scheibenwischern dadurch verursacht, dass Verunreinigungen wie beispielsweise von Bäumen auf die Scheibe fallende Nadeln, Blätter und Blüten längs der Scheibe nach unten gleiten und sich oberhalb der Scheibenwischer ansammeln. Sie bilden dadurch ein Hindernis für die Bewegung der Scheibenwischer, die bei ihrer nächsten Inbetriebnahme - infolge einer Benetzung der Scheibe durch Regen oder durch Reinigungsflüssigkeit - diese Verunreinigungen teilweise aus dem Blickfeld wegwischen, sie aber teilweise an der Scheibe zerquetschen, auf welcher dadurch ein Belag entsteht, der schlecht entfernbar ist.

Bis heute wird in verschiedener Weise versucht, die oben beschriebenen Nachteile zu vermeiden. Beispielsweise legt man Papier, insbesondere Zeitungspapier, zwischen die Scheibenwischer und die Scheibe; dies ist offensichtlich nur ein Notbehelf und kann unangenehme Folgen verursachen, wenn plötzlich Regen fällt und das Papier zu einer breiartigen Masse aufweicht. Oft werden auch die Scheibenwischer einfach in ihre Reinigungsstellung gekippt; in einer solchen Stellung sind sie aber von weitem sichtbar, was leider dazu führen kann, dass die Scheibenwischer durch einen Vandalenakt abgebrochen oder sonstwie beschädigt werden.

Die Aufgabe der Erfindung wird somit darin gesehen, eine Massnahme vorzuschlagen, durch welche sich die genanntem Nachteile vermeiden lassen.

Diese Aufgabe wird erfindungsgemäss durch die Merkmale des kennzeichnenden Teils des Patentanspruchs 1 gelöst.

Vorteilhafte Weiterbildungen der erfindungsgemässen Einrichtung werden durch die Merkmale der abhängigen Patentansprüche definiert.

Die neue Einrichtung besteht aus einer Fixiervorrichtung und einem Distanzhalter. Die Fixiervorrichtung ist dazu bestimmt, am Schwenkarm des Scheibenwischers befestigt zu werden und sich bei Inbetriebnahme des Scheibenwischers solidarisch mit dem Schwenkarm zu bewegen. An dieser Fixiervorrichtung ist der Distanzhalter befestigt, der eine Scheibenkontaktfläche besitzt. Der Distanzhalter ist relativ zur Fixiervorrichtung zwischen einer Wirklage und einer Ruhelage verschiebbar. Befindet sich der Distanzhalter in seiner Wirklage, so ist der Abstand der Scheibenkontaktfläche von der Fixiereinrichtung gross, die Scheibenanlagefläche liegt an der Scheibe an und beabstandet dadurch den Scheibenwischer gegen die Kraft einer Zustellanlage von der Scheibe. Befindet sich der Distanzhalter in seiner Ruhelage, so ist der Abstand der Scheibenkontaktfläche von der Fixiervorrichtung klein, die Scheibenkontaktfläche liegt nicht an der Scheibe an und es gibt keinen Abstand zwischen dem Scheibenwischer und der Scheibe, was bedeutet, dass die Scheibenwischer unter der Kraft der Zustellvorrichtung an der Scheibe anliegen. Es ist offensichtlich, dass die Länge des Distanzhalters so zu bemessen ist, dass der von ihm in seiner Wirklage geschaffene Abstand zwischen dem Schwenkarm und der Scheibe ausreicht, den gesamten Scheibenwischer von der Scheibe zu entfernen.

Die Fixiervorrichtung weist im allgemeinen zwei Fixierteile auf, die lösbar aneinander befestigt sind und die zusammen eine Aufnahme für den schwenkbaren Arm des Scheibenwischers bilden.

Obwohl es möglich wäre, die Fixiervorrichtung so auszubilden, dass der erste Fixierteil plattenartig und der zweite Fixierteil nur bridenartig ausgebildet ist, bevorzugt man eine Fixiervorrichtung aus zwei plattenartigen Fixierteilen, zwischen welchen eine Aufnahme für den Schwenkarm in Form eines Kanals gebildet wird.

Um die neue Einrichtung bei verschiedenen Verkehrsmitteln zu verwenden, deren Schwenkarme unterschiedlich ausgebildet sind, kann man, statt einer Vielzahl verschiedener starrer Fixiervorrichtungen, eine universelle Fixiervorrichtung herstellen, bei welcher die Aufnahme für den Schwenkarm mindestens teilweise kompressibel ist und beispielsweise aus Schaumstoff besteht, so dass der Schwenkarm bei der gegenseitigen Befestigung der Fixierteile vom komprimierten Schaumstoff gehalten wird.

Die beiden Fixierteile können in jeder beliebigen, möglichst zerstörungsfrei lösbaren, form- oder kraftschlüssigen Weise, ggfs auch mit Hilfe zusätzlicher Fixiermittel wie Schrauben oder durch Klebung, miteinander verbunden sein.

Der im allgemeinen längliche Distanzhalter kann an der Fixiervorrichtung so befestigt sein, dass er längs einer Verschiebungsachse zwischen seiner Wirklage und seiner Ruhelage hin- und herverschiebbar ist.

Zu diesem Zweck können die Fixiervorrichtung und der Distanzhalter mit komplementären Gewinden versehen sein, so dass die Verschiebung des Distanzhalters durch seine Verschraubung zustande kommt.

Der Distanzhalter kann als Hebel oder Exzenter ausgebildet sein und durch eine Schwenkung um eine Achse von seiner Ruhelage in seine Wirklage und zurück bewegt werden.

Bei einem bevorzugten Ausführungsbeispiel ist diese Achse im wesentlichen quer zum Scheibenwischer gerichtet.

Besonders günstig ist es, wenn die Achse, um welche der Distanzhalter geschwenkt wird, mindestens annähernd parallel zum Schwenkarm des Scheibenwischers verläuft; bei einer solchen Anordnung gelangt der Distanzhalter beim Antreiben des Scheibenwischers infolge der Haftreibung zwischen seiner Scheibenkontaktfläche und der Scheibe praktisch selbsttätig in seine Ruhelage; es ist also nicht nötig, bei einer Inbetriebnahme des Verkehrsmittels den Distanzhalter von Hand oder durch eine Rückstellvorrichtung in seine Ruhelage zu bringen.

Um die neue Einrichtung möglichst universell für verschiedene Scheibenwischervorrichtungen verwenden zu können, kann beispielsweise ein einziges, universell verwendbares Fixierteil mit auswechselbaren Distanzhaltern als Set angeboten werden, wobei der Käufer selbst den geeigneten Distanzhalter montiert. Kleinere Unterschiede zwischen verschiedenen Schwenkarmen bzw. Scheibenwischern können auch ausgeglichen werden, wenn die Scheibenkontaktfläche eine gekrümmte Fläche ist, so dass bei einem hebelartigen Distanzhalter eine Wirklage erreicht werden kann, bevor der Distanzhalter um den gesamten möglichen Winkelbereich verschwenkt worden ist.

Zu diesem Zwecke ist es vorteilhaft, wenn die Scheibenkontaktfläche abgestuft ausgebildet ist und/oder gegenüber der Scheibe eine grosse Haftreibung aufweist. Eine grosse Haftreibung ist auch günstig, damit sich, wie früher beschrieben, der Distanzhalter beim Einschalten der Scheibenwischer selbsttätig in seine Ruhelage verschiebt.

Um die neue Einrichtung mit einer Bezeichnung zu versehen, beispielsweise mit dem Typ des Fahrzeuges, zu welchem sie passt, ist es günstig, wenn die Fixiervorrichtung eine in jeder Stellung des Schwenkarmes gut sichtbare Fläche aufweist, an welcher die Bezeichnung aufbringbar ist.

In den bisher beschriebenen Ausführungsformen bildet die neue Einrichtung eine einfaches Gerät, das insbesondere als preiswertes Zubehörteil für Automobile vielerorts verkauft werden kann. Die neue Einrichtung kann aber auch in anspruchsvolleren Ausführungsarten, beispielweise direkt vom Hersteller als Option, angeboten werden. Auf solche Ausführungsformen beziehen sich die folgenden Erläuterungen.

Wie schon erwähnt, kann es vorkommen, dass man vergisst, den Distanzhalter beim Verlassen des Verkehrsmittels in seine Wirklage oder bei Inbetriebnahme des Fahrzeuges in seine Ruhelage zu bringen. Im ersten Falle bringt das Vorhandensein des Distanzhalters keinen Nutzen, im zweiten Fall können sich bei der Benutzung des Verkehrsmittels mit von der Scheibe entfernten Scheibenwischern gewisse Nachteile ergeben: so kann die durch den Fahrtwind verursachte Vibration der Scheibenwischervorrichtung zu einer raschen Abnützung der verschiedenen Befestigungsanordnungen des Scheibenwischers und seines Schwenkarms führen; auch kann es bei plötzlicher Notwendigkeit, den Scheibenwischer zu benutzen, zu unangenehmen Situationen kommen, wenn sich dieser nicht selbsttätig oder vom Inneren des Verkehrsmittel aus zur Anlage an der Scheibe bringen lässt.

Um diese Nachteile zu vermeiden, ist es günstig, die neue Einrichtung so zu gestalten, dass der Distanzhalter mechanisch oder elektrisch fernsteuerbar ist. Beispielsweise kann er aus dem Inneren des Verkehrsmittels betätigbar sein. Besonders vorteilhaft, insbesondere zur Verwendung an einem Verkehrsmittel mit einem Verbrennungsmotor, ist eine Anordnung, bei welcher der Distanzhalter automatisch bei Einführen des Zündschlüssels in seine Ruhelage und bei Entfernung des Zündschlüssels in seine Wirklage gebracht wird.

Im folgenden wird die Erfindung anhand von Beispielen und mit Bezug auf die Zeichnung genauer beschrieben. Es zeigt:
- **Fig. 1**: eine Scheibenwischervorrichtung mit einer Einrichtung nach der Erfindung, mit dem Distanzhalter in seiner Ruhelage, in einem Schaubild;
- **Fig. 2**: die Scheibenwischervorrichtung gem. Fig. 1, mit dem Distanzhalter in seiner Wirklage, in einem Schaubild;
- **Fig. 3**: eine Einrichtung nach der Erfindung, bestehend aus einer Fixiervorrichtung aus zwei Fixierteilen und aus einem Distanzhalter, in nicht montiertem Zustand, in einem Schaubild;
- **Fig. 4**: eine weitere Einrichtung nach der Erfindung, in in einem Schaubild;
- **Fig 5**: einen Distanzhalter in Exzenterart; und
- **Fig. 6**: einen weiteren Distanzhalter mit gestufter Scheibenkontaktfläche

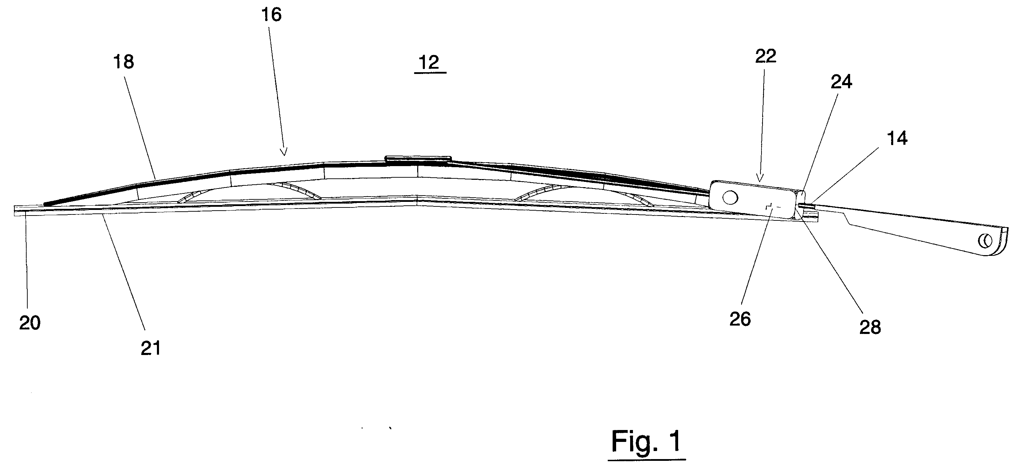

Die in **Fig. 1** dargestellte Scheibenwischervorrichtung **12** weist einen Schwenkarm **14** auf, der in nicht dargestellter Weise einerseits mittels einer Antriebsvorrichtung im wesentlichen parallel zu einer Scheibe und anderseits manuell quer zur Scheibe aus seiner in **Fig. 1** gezeigten Arbeitsstellung in eine Reinigungsstellung schwenkbar ist. Die Scheibe als nicht zur erfindungsgemässen Vorrichtung gehörend ist in der Zeichnung nicht dargestellt.

Am Schwenkarm **14** ist gelenkig ein Scheibenwischer **16** befestigt, der durch einen Wischerträger **18** und ein an diesem befestigtes Wischerblatt **20** mit einer die Scheibe bestreichenden Lippe **21** gebildet wird. Am Schwenkarm **14** ist eine Einrichtung **22** nach der Erfindung angeordnet, welche aus einer Fixiervorrichtung **24** und einem Distanzhalter **26** besteht, welcher eine Scheibenkontaktfläche **28** enthält. Der Distanzhalter **26** befindet sich in seiner Ruhelage und liegt dabei vollständig an einer Seitenfläche der Fixiervorrichtung **24** an, wobei seine Scheibenkontaktfläche **28** nicht über die Fixiervorrichtung **24** hinausragt; in dieser Lage ist sein Abstand von der Fixiervorrichtung **24** minimal.

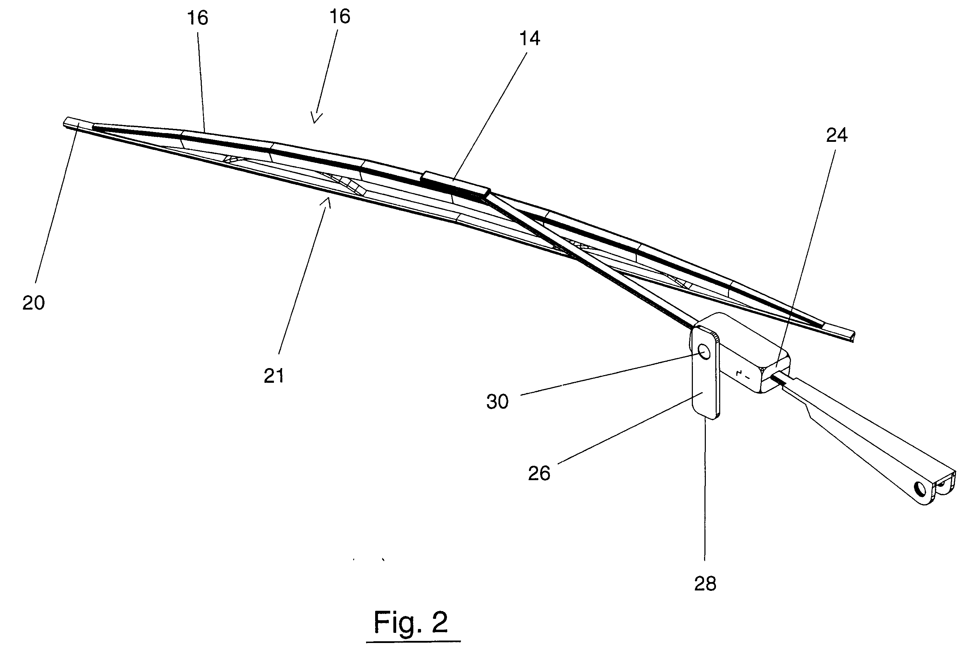

In **Fig. 2** ist dieselbe scheibenwischervorrichtung **12** nochmals gezeigt, wobei für gleiche Teile auch gleiche Ueberweisungszeichen verwendet wurden. Im Unterschied zu **Fig. 1** wurde aber der Distanzhalter **26** gegenüber der Fixiervorrichtung **24** um eine quer zum Schwenkarm **14** gerichtete Drehachse **30** gedreht, so dass er sich in seinen Wirklage befindet; in dieser Lage ist der Abstand der Scheibenkontaktfläche **28** von der Fixiervorrichtung **24** maximal. Die Scheibenkontaktfläche **28** stützt sich an der Scheibe ab und beabstandet dadurch den Scheibenwischer **16** von der Scheibe.

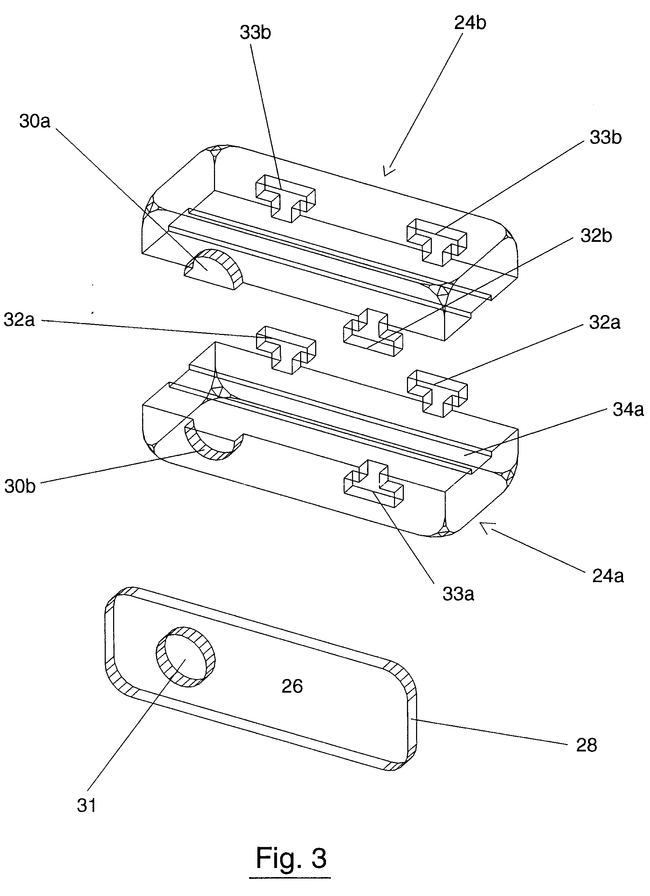

**Fig. 3** zeigt die Einrichtung **22** nach der Erfindung deutlicher. Sie umfasst die Fixiervorrichtung **24** mit den beiden plattenartigen Fixierteilen **24a** und **24b**. Der Fixierteil **24a** weist zwei Ansätze **32a** und eine Ausnehmung **33a** auf. In seiner oberen Fläche ist ein Kanal **34a** vorgesehen. Ausserdem besitzt der Fixierteil **24a** einen seitlichen Ansatz **30a**. Der Fixierteil **24b** weist einen Ansatz **32b** und zwei Ausnehmungen **33b** auf. Die untere Fläche des Fixierteils **24b** kann ebenfalls einen Kanal **34b** enthalten. Ausserdem weist auch der Fixierteil **24b** einen seitlichen Ansatz **30b** auf. Die Ansätze **32a** und die Ausnehmungen **33b** sind komplementär ausgebildet, ebenso wie der Ansatz **32b** und die Ausnehmung **33a**. Um die Fixierteile **24a** und **24b** aneinander zu befestigen und sie dabei gleichzeitig am Schwenkarm **14** zu fixieren, legt man den Fixierteil **24a** so an den Schwenkarm **14**, dass dieser durch den Kanal **34a** verläuft. Dann wird der Fixierteil **24b** in eine Lage gebracht, in der seine untere Fläche in der gleichen Ebene liegt wie die obere Fläche des Fixierteils **24a** und in der die jeweils komplementären Ansätze und Ausnehmungen fluchten. Dann wird der Fixierteil **24b** in Richtung des Pfeiles **A** mit dem Fixierteil **24a** zusammengeschoben. Im zusammmengeschobenen Zustand bilden die seitlichen Ansätze **30a** und **30b** zusammen die Drehachse **30** für den auf diese Drehachse **30** aufschiebbaren Distanzhalter **26**, wobei die Drehachse **30** und eine Ausnehmung **31** des Distanzhalters **26** geriffelt Flächen aufweisen.

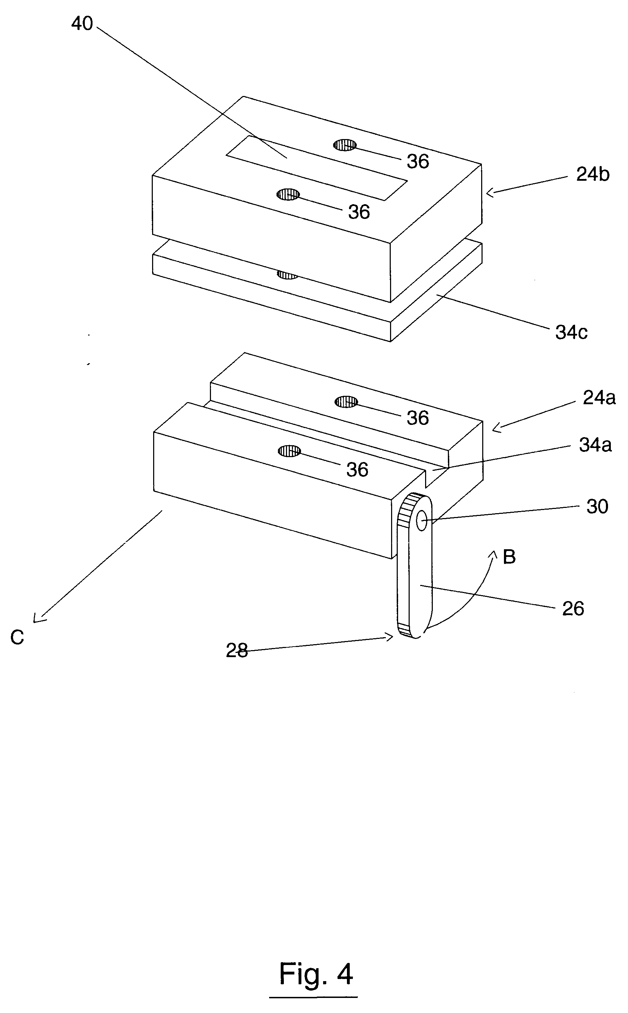

Die in **Fig. 4** dargestellte Ausführungsform der erfindungsgemässen Einrichtung **22** weist ebenfalls zwei Fixierteile **24a, 24b** sowie einen Distanzhalter **26** auf. Der Fixierteil **24b** weist oben eine Fläche **40** auf, welche sich zur Anbringung einer Bezeichnung eignet. Der Fixierteil **24a** enthält einen Kanal **34a** für den Schwenkarm **14**. Der Fixierteil **24b** weist an seiner unteren, den Fixierteil **24a** berührenden Fläche eine kompressible Aufnahmefläche **34c** für den Schwenkarm **14** auf. Die beiden Fixierteile **24a, 24b** werden mittels Stiften oder Schrauben, für welche Bohrungen **36** vorgesehen sind, aneinander befestigt. Der Fixierteil **24a** weist einen die Drehachse **30** für den Distanzhalter **26** bildenden Ansatz auf. Die Drehachse **30** verläuft mindestens annähernd parallel zum Schwenkarm **14**. Der Distanzhalter **26** ist in **Fig. 4** in seiner Wirklage dargestellt, in die er gebracht wird, wenn ein Verkehrsmittel mit der Scheibenwischeranlage nicht benützt wird. Die Scheibenkontaktfläche **28** des Distanzhalters **26** ist eine gekrümmte Fläche und ist aus einem Material gefertigt, das eine verhältnismässig grosse Haftreibung mit der Scheibe hat. Vergisst man bei einer Wiederinbetriebnahme des Verkehrsmittels, den Distanzhalter **24** in seine Ruhelage zu bringen, so wird er bei Benützung der Scheibenwischeranlage in Richtung des Pfeiles **B** von selbst aus seiner Wirklage in seine Ruhelage gedreht, sobald sich der Schwenkarm **14** und damit die Fixierteile **24a, 24b** in Richtung des Pfeiles **C** zu bewegen beginnt. Die Ursache dafür ist die Haftreibung zwischen der Scheibenkontaktfläche **28** des Distanzhalters **26** und der Scheibe.

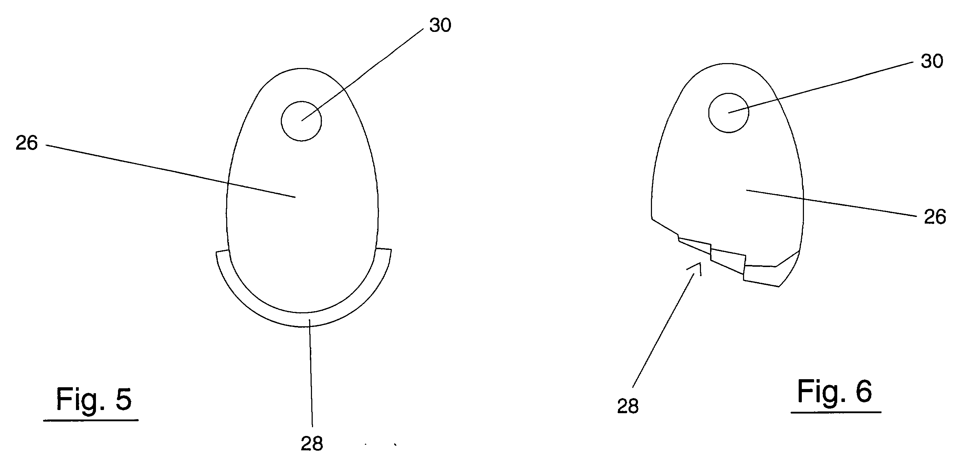

Die bisher beschriebenen Distanzhalter weisen die Form von Hebeln auf. Gemäss **Fig. 5** kann der Distanzhalter **26** auch als Exzenter ausgebildet sein.

Ausserdem kann gemäss **Fig. 6** die Scheibenkontaktfläche **28** des Distanzhalters **26** abgestuft ausgebildet sein.

Die Distanzhalter gemäss **Fig. 5** und **Fig. 6** sind besonders geeignet, um mit verschiedenen Scheibenwischervorrichtungen verwendet zu werden.

Die beschriebenen Ausführungsbeispiele sind nur eine kleine Auswahl von möglichen Ausbildungen der erfindungsgemässen Einrichtung, welche im Rahmen der folgenden Patentansprüche in einer Vielzahl weiterer Ausführungsformen ausgebildet sein kann.

## Patentansprüche

1. Einrichtung **(22)** zum Beabstanden eines Scheibenwischers **(16)** von einer Scheibe, welcher Scheibenwischer **(16)** an einem parallel und quer zur zur Scheibe schwenkbaren Schwenkarm **(14)** befestigt und durch eine Zustellvorrichtung an die Scheibe gepresst ist,
**gekennzeichnet durch**
eine am Schwenkarm **(14)** fixierbare Fixiervorrichtung **(24)** und einen an der Fixiervorrichtung **(24)** beweglich befestigten, eine Scheibenkontaktfläche **(28)** besitzenden Distanzhalter **(26)**, welcher zwischen einer Wirklage, in welcher der Abstand der Scheibenkontaktfläche **(28)** von der Fixiervorrichtung **(24)** maximal ist, und einer Ruhelage, in welcher der Abstand der Scheibenkontaktfläche **(28)** von der Fixiervorrichtung **(24)** minimal ist, bewegbar ist, um den Scheibenwischer **(16)** in der Wirklage des Distanzhalters **(26)** gegen die Kraft der Zustellvorrichtung von der Scheibe **(10)** zu beabstanden.

2. Einrichtung **(22)** nach Patentanspruch 1,
**dadurch gekennzeichnet,**
dass die Fixiervorrichtung **(24)** einen ersten Fixierteil **(24a)** und einen zweiten Fixierteil **(24b)** aufweist, welche lösbar aneinander befestigt sind und zusammen eine Aufnahme **(34a, 34b, 34c)** für den Schwenkarm **(14)** bilden.

3. Einrichtung **(22)** nach Patentanspruch 2,
**dadurch gekennzeichnet,**
dass die Aufnahme ein Kanal **(34a, 34b)** ist.

4. Einrichtung **(22)** nach Patentanspruch 2,
**dadurch gekennzeichnet,**
dass die Aufnahme mindestens eine kompressible Aufnahmefläche **(34c)** aufweist.

5. Einrichtung **(22)** nach Patentanspruch 1,
**dadurch gekennzeichnet,**
dass der Distanzhalter **(26)** längs einer quer zur Scheibenkontaktfläche **(28)** verlaufenden Verschiebungsachse verschiebbar ist.

6. Einrichtung **(22)** nach Patentanspruch 5,
**dadurch gekennzeichnet,**
dass der Distanzhalter **(26)** und die Fixiervorrichtung **(24)** komplementäre Gewinde für die Verschiebung des Distanzhalters **(26)** durch Schraubung aufweisen.

7. Einrichtung **(22)** nach Patentanspruch 1,
**dadurch gekennzeichnet,**
dass der Distanzhalter **(26)** um eine an der Fixiervorrichtung **(24)** angeordnete Drehachse **(34)** verstellbar ist.

8. Einrichtung **(22)** nach Patentanspruch 7,
**dadurch gekennzeichnet,**
dass die Drehachse **(34)** quer zum Schwenkarm **(14)** der Scheibenwischervorrichtung **(12)** verläuft.

9. Einrichtung **(22)** nach Patentanspruch 7,
**dadurch gekennzeichnet,**
dass die Drehachse **(34)** mindestens annähernd parallel zum Schwenkarm **(14)** der Scheibenwischervorrichtung **(12)** verläuft.

10. Einrichtung **(22)** nach Patentanspruch 1,
**dadurch gekennzeichnet,**
dass die Scheibenkontaktfläche **(28)** des Distanzhalters **(26)** eine gekrümmte Fläche ist.

11. Einrichtung **(22)** nach Patentanspruch 1,
**dadurch gekennzeichnet,**
dass die Scheibenkontaktfläche **(28)** des Distanzhalters **(26)** abgestuft ist.

12. Einrichtung **(22)** nach Patentanspruch 1,
**dadurch gekennzeichnet,**
dass die Scheibenkontaktfläche **(28)** des Distanzhalters **(26)** gegenüber der Scheibe **(10)** eine grosse Haftreibung aufweist.

13. Einrichtung **(22)** nach Patentanspruch 1,
**dadurch gekennzeichnet,**
dass der Distanzhalter **(26)** stufenlos oder schrittweise verstellbar ist.

14. Einrichtung **(22)** nach Patentanspruch 1,
**dadurch gekennzeichnet,**
dass die Fixiervorrichtung **(24)** eine in jeder Stellung des Schwenkarms **(14)** sichtbare Fläche **(40)**zur Aufnahme einer Bezeichnung aufweist.

15. Einrichtung **(22)** nach Patentanspruch 1,
**dadurch gekennzeichnet,**
dass der Distanzhalter **(26)** mechanisch oder elektrisch fernsteuerbar ist.
